# EUROPEAN PATENT SPECIFICATION

(11) **EP 3 608 052 B1**
(45) Date of publication and mention of the grant of the patent: **18.11.2020**
(21) Application number: 19187502.0
(22) Date of filing: 22.07.2019
(51) Int. Cl.: B23Q 7/04, B23B 39/22, B23B 41/00, B23Q 39/02

(54) **MACHINE FOR THE WORKING OF PRISMATIC PROFILES**
WERKZEUGMASCHINE ZUM BEARBEITEN PRISMATISCHER PROFILE
MACHINE OUTIL POUR L'USINAGE DE PROFILES PRISMATIQUES

(30) Priority: 23.07.2018 IT 201800007422
(43) Date of publication of application: 12.02.2020
(73) Proprietor: Cesare Galdabini S.p.A., 27029 Vigevano (Pavia) (IT)
(72) Inventor: GALDABINI, Luigi, I-21013 GALLARATE (Varese) (IT); PORTALUPI, Roberto, I-21013 GALLARATE (Varese) (IT); FARINA, Stefano, I-20099 SESTO SAN GIOVANNI (Milano) (IT); PLANCES, Giuseppe, I-20021 BOLLATE (Milano) (IT); BOSONI, Roberto, I-29121 PIACENZA (IT)
(74) Representative: Leihkauf, Steffen Falk

(56) References cited:
- DE-A1- 2 930 006
- JP-A- H01 246 038
- JP-A- S58 196 910
- US-A- 4 702 667

## Description

The present invention relates in general to a machine for the working of prismatic profiles.

In many fields of the mechanics, such as for example machine tools, packaging lines, product assembling lines for assembling products of any kind, lifting apparatuses etc., prismatic profiles are commonly used which are properly machined to perform the function of sliding guides for precisely guiding movements, typically translational movements. Usually, driving devices, such as for example rack and pinion devices, are also provided for in combination with these prismatic profiles acting as guides.

Both the prismatic profiles used as guides and the prismatic profiles used as racks are characterized by the presence of a large number of workings, in particular borings, along one or more of the longitudinal generating lines of these profiles. These borings are used to secure the profiles, usually by means of screw connection, to structures they will be part of. Such workings are usually made with a constant spacing and are arranged in most cases along one or at most two parallel longitudinal generating lines. Tolerances in the spacing, and hence in the positioning of the workings, must be met both as regards each single centre-to-centre distance and collectively, i.e. considering the sum of all the centre-to-centre distances. This means for example that the same positioning tolerance must be met for two adjacent workings, as well as for the workings positioned at the opposite ends of the profile, which is typically 2 to 6 meters long.

The prismatic profiles used as guides or racks are generally made of steel, preferably alloy steel, and always have suitable sliding or rolling surfaces which usually have to undergo heat treatment(s) to ensure the required wear resistance. Heat treatments produce residual stresses inside the profile which cause significant deformations of the same in the planes containing the longitudinal axis of the profile. These deformations may adversely affect the subsequent boring operations, thereby making it difficult to ensure the required precision in the positioning of the borings. In order to overcome this problem, the profiles intended to be used as guides and racks are normally subject to a cold straightening process, which is carried out by generating flexural and torsional plastic deformations on the profile so as to compensate for the deformations of the profile resulting from the heat treatment(s).

The straightening process inevitably lengthens the cycle time, while it would be a significant advantage for guide system makers to have a boring machine that is able to bear high deformations of the guides, using the straightening process just in the phase before the final grinding operation, which operation is always necessary to ensure the high precision required by the final applications.

The boring process is typically carried out by means of multi-spindle machines to ensure the desired productivity.

Profile boring machines are known which use different working devices and different strategies for moving the working devices relative to the profiles. JP S58 196910 A discloses a machine for working prismatic profiles, which comprises the features of the preamble of independent claim 1. Other examples of profile boring machines are disclosed in CN105436550A US4215958, US4667383, and EP 1 222 986 A2. Many of these boring machines have been conceived for working aluminium profiles for doors and windows, which profiles are much less rigid and much less affected by the above-discussed problems of deformation than prismatic profiles used as guides, or for working structural beams, where a lower level of precision in the positioning of the borings is usually required.

The known boring machines can be divided basically into two categories depending on their architecture, namely machines with a fixed-workpiece architecture (and with movable working units) and machines with a movable-workpiece architecture (and with working units having a limited range of movement).

Machines with a fixed-workpiece architecture are able to compensate for the deformations of the workpiece only by means of the clamping fixtures that keep the workpiece clamped on the machine. These clamping fixtures must therefore be extremely rigid. Accordingly, these clamping fixtures are very expensive and, furthermore, affected by the shortcoming that they are subject to additional residual stresses during working, which adversely affect the final precision.

Machines with a movable-workpiece architecture, on the other hand, are not able to compensate for the deformations of the workpiece by means of the workpiece handling systems (typically based on grippers or rollers), and therefore lead, if not to position errors, at least to jamming of the workpieces in the machines, which adversely affect the reliability and hence the productivity of the modern production systems.

At the same time, since guides and racks are available in many different types and sizes, there is a need for highly flexible machines that are able to work, with the same high precision level, different types of profiles in terms of cross-section, length, number of workings, number of longitudinal axes on which the workings are provided, spacing between the workings, etc.

It is thus an object of the present invention to provide a machine for the working of prismatic profiles that is able to combine high working precision with high flexibility and reduced costs, and that therefore allows to perform with high precision different types of workings (such as, for example, boring, flaring, tapping, drilling, spot-facing and rolling) on different types of prismatic profiles (differing from each other in terms, for example, of cross-section, length, number of workings, number of longitudinal axes on which the workings are provided, spacing between the workings, etc.).

This object is achieved according to the present invention by virtue of a machine for the working of prismatic profiles having the features set forth in the accompanying independent claim 1.

Advantageous embodiments of the machine according to the invention are specified in the dependent claims.

The features and advantages of the present invention will be apparent from the following detailed description, given purely by way of non-limiting example with reference to the appended drawings, wherein:
Figure 1 is a perspective view of a machine for the working of prismatic profiles according to an embodiment of the present invention;
Figure 2 is a perspective view showing the base of the machine of Figure 1, with supporting rollers for supporting the profiles being worked and with two uprights carrying each a respective working head;
Figures 3 and 4 are perspective views showing, from different points of view, the workpiece clamping unit of the machine of Figure 1;
Figure 5 is a perspective view showing the workpiece handling unit of the machine of Figure 1;
Figure 6 is a perspective view showing in detail one of the two gripping devices of the handling unit of Figure 5; and
Figures 7 and 8 schematically show the structure of the gripping device of Figure 6.

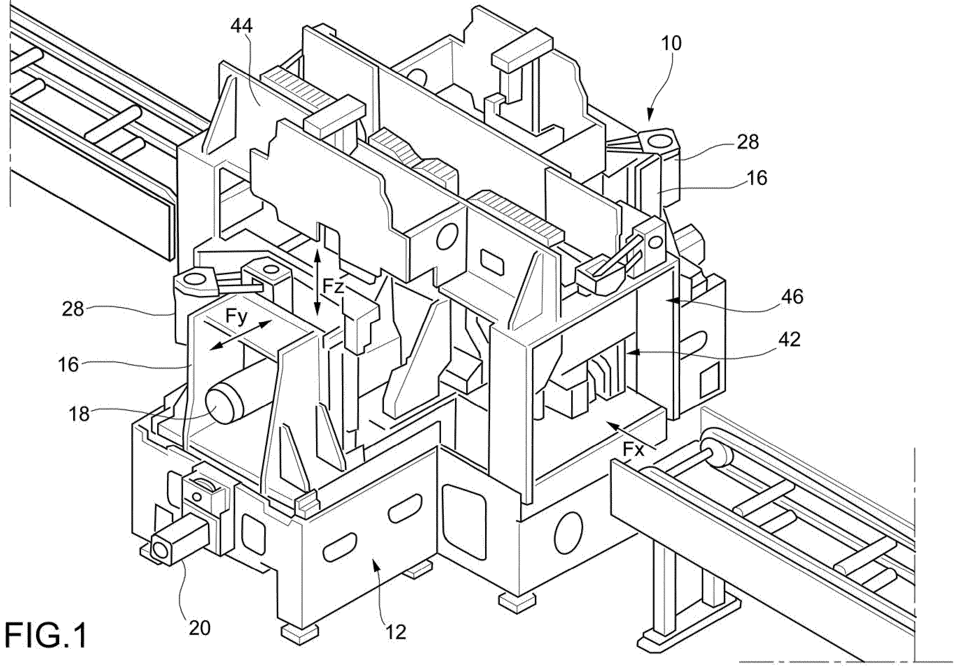

With reference first to Figure 1, a machine for the working of prismatic profiles according to an embodiment of the present invention is generally indicated at 10.

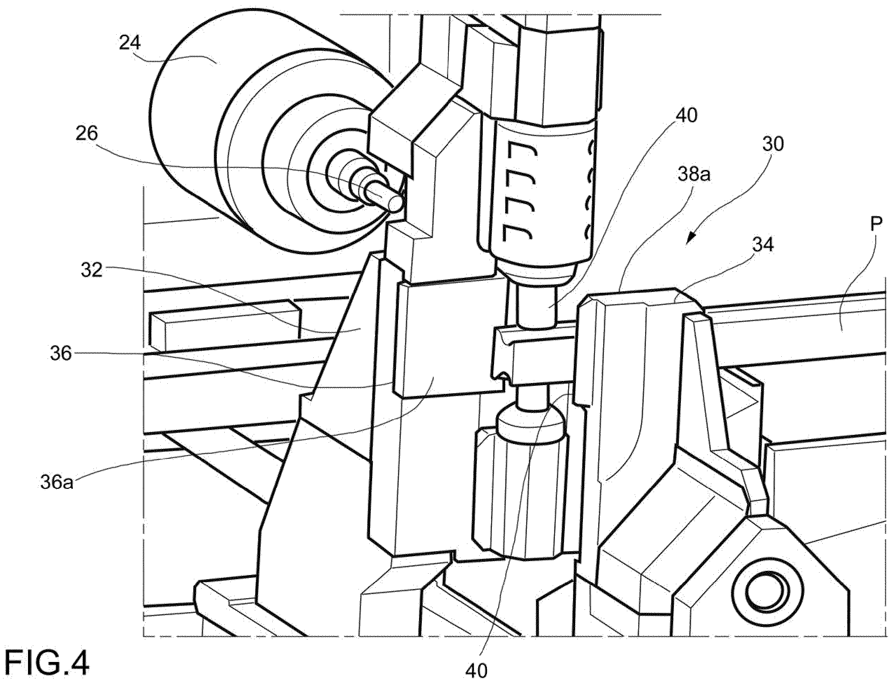

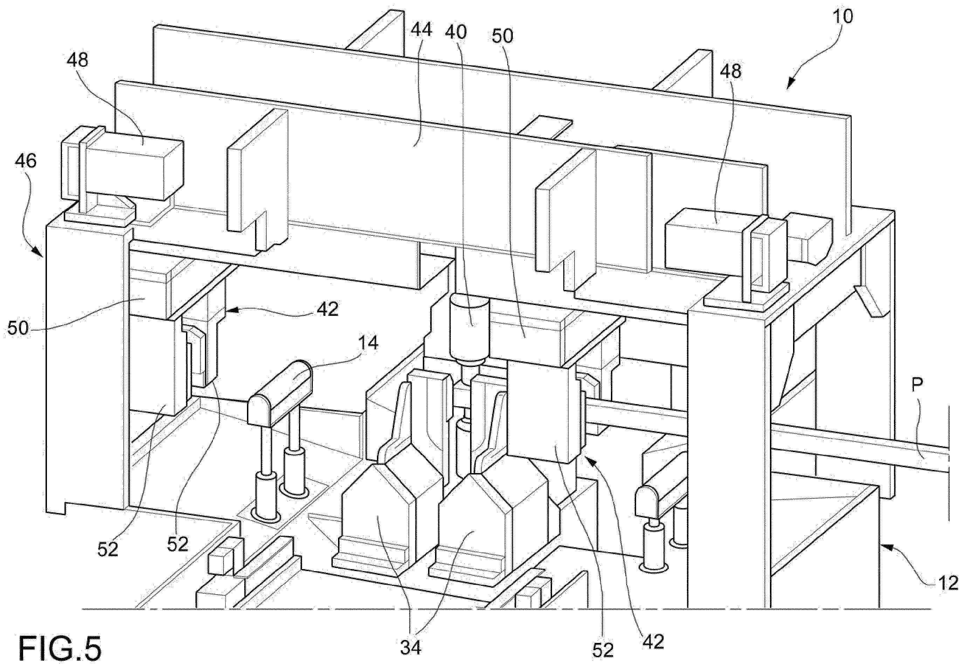

The machine 10 is designed according to the movable-workpiece architecture mentioned in the introductory part of the present description and is able to carry out various kinds of working operations, for example boring, flaring, tapping, drilling, spot-facing and rolling operations, on prismatic profiles (hereinafter simply referred to as profiles). The profiles to be worked are supplied to the machine 10 and moved forward through the machine 10 in a longitudinal direction (as indicated by arrow Fₓ) to allow the various working operations to be carried out along one or more longitudinal axes of the profiles. An example of a profile that can be worked by the machine 10 is shown in Figures 4 and 5, where it is indicated at P.

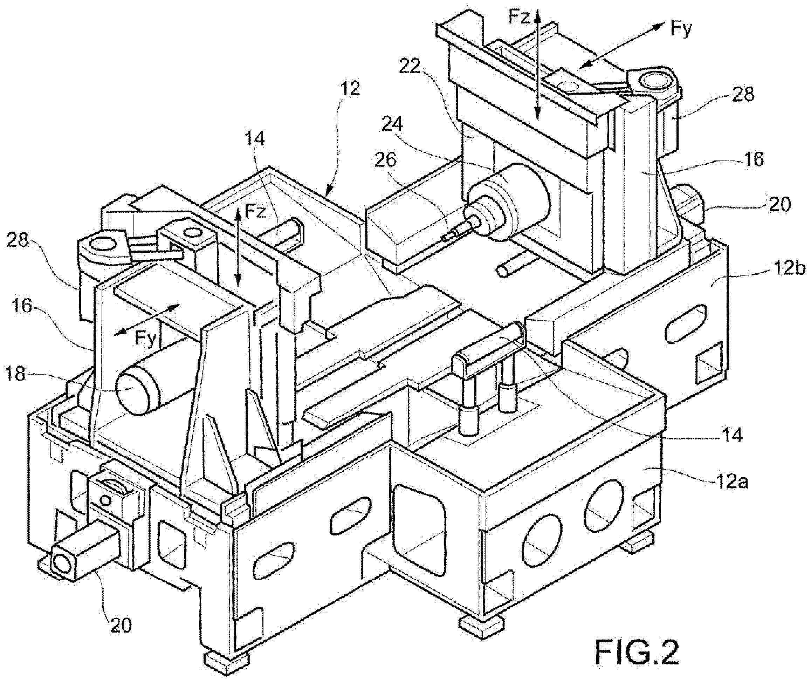

The machine 10 comprises first of all a stationary base 12, that can be observed in greater detail in Figure 2. With reference to Figure 2, the base 12 has, in plan view, a substantially cross-shaped configuration, with a first base portion 12a, or longitudinal base portion, extending in the longitudinal direction, and a second base portion 12b, or transverse base portion, extending in the transverse direction, i.e. in a horizontal direction perpendicular to the longitudinal direction.

Supporting rollers 14 are mounted on the longitudinal base portion 12a and are arranged with their respective axes of rotation oriented transversely. The supporting rollers 14 are free to rotate about the respective axes of rotation and have the function of supporting the profiles P that are being moved forward in the longitudinal direction through the machine 10. In the illustrated embodiment there are two supporting rollers 14, one of which is positioned on the inlet side of the machine (i.e. on the side where the profile P to be worked is fed to the machine), while the other is positioned on the outlet side of the machine (i.e. on the side where the profile P that has been worked leaves the machine). A different number of supporting rollers may however be provided.

Two uprights 16, each carrying a respective working head 18, are mounted on the transverse base portion 12b. The two uprights 16 with the respective working heads 18 preferably have an identical structure to each other and are arranged symmetrically to each other with respect to the longitudinal direction.

Each upright 16 is movable horizontally relative to the base 12 by means of linear guides (not shown in the drawings, but of per-se-known type) in the transverse direction (as indicated by arrow F_{y}) under control of a respective motor 20.

Each working head 18 comprises a support body 22, an electrically-operated spindle 24 that is carried by the support body 22 and is arranged with its axis of rotation oriented transversely, and a tool 26 carried by the electrically-operated spindle 24 to be driven into rotation by the latter. The tool 26 may of course be replaced depending on the type of working operation to be carried out on the profile P and, to this end, the machine 10 will preferably be provided with a tool storage unit and with an automatic tool-changing system (which are neither described nor illustrated herein as they do not form part of the present invention).

Each working head 18 is mounted so as to be vertically movable (as indicated by arrow F_{z}) relative to the associated upright 16 by means of linear guides (not shown in the drawings, but of per-se-known type). To each working head 18 there is associated a respective motor 28, carried by the respective upright 16, to control the vertical translational movement of the working head 18 relative to the upright 16.

Each working head 18 is thus movable relative to the base 12 in two perpendicular directions, namely in the transverse direction (F_{y}) and in the vertical direction (F_{z}). The movement of each working head 18 in the transverse direction causes the respective tool 26 to move more deeply into the material of the profile P, thereby adjusting the working depth, while the movement of each working head 18 in the vertical direction allows to position the respective tool 26 each time on a given longitudinal axis of the profile P that is being worked. The possibility of vertical movement of the working heads 18, though preferable, is not however essential for the purposes of the present invention. It is therefore also conceivable a machine wherein the two working heads 18 are movable in the transverse direction only.

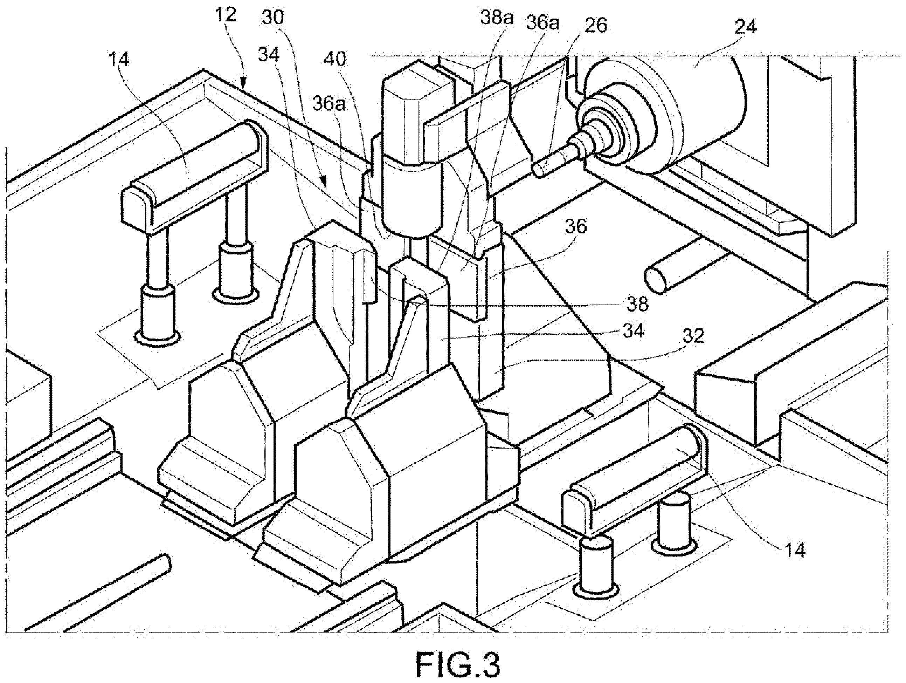

With reference now to Figures 3 and 4, the machine 10 further comprises a workpiece clamping unit, generally indicated at 30, arranged to clamp the profile P near the region of the profile where the tools 26 of the working heads 18 will carry out the respective working operations.

The workpiece clamping unit 30 comprises first of all an abutment member 32, which is attached to the base 12, and a pair of clamping members 34, which are movable in the transverse direction relative to the base 12 to clamp the profile P, cooperating with the abutment member 32, on transversely opposite sides of the profile. Both the clamping members 34 are shown in Figure 3, while only one of them is shown in Figure 4. Assuming that the profile P is fed from right to left with respect to a person looking at Figures 3 and 4, the abutment member 32 is arranged on the right side of the profile, while the two clamping members 34 are arranged on the left side of the profile.

The abutment member 32 has a pair of stationary abutment surfaces 36a against which the right side of the profile P is urged when the profile is clamped between the clamping members 34 and the abutment member 32. The stationary abutment surfaces 36a lie in a same vertical plane, perpendicular to the transverse direction, and are longitudinally spaced from each other so as to allow the tool 26 carried by the working head 18 arranged on the right side of the profile P to move between them. Preferably, each stationary abutment surface 36a is formed by a respective plate 36, which is made of a material with high hardness (and hence with high wear resistance) and is obtained as a piece separate from the abutment member 32 so as to be easily replaceable if damaged or worn.

Likewise, each clamping member 34 has a respective movable abutment surface 38a which is urged against the left side of the profile P when the profile is clamped between the clamping members 34 and the abutment member 32. The movable abutment surfaces 38a extend each in a vertical plane, perpendicular to the transverse direction, and are longitudinally spaced from each other so as to allow the tool 26 carried by the working head 18 placed on the left side of the profile P to move between them. Preferably, each abutment surface 38a is formed by a respective plate 38, which is made of a material with high hardness (and hence with high wear resistance) and is obtained as a piece separate from the respective clamping member 34 so as to be easily replaceable if damaged or worn.

The transverse opening and closing movement of the clamping members 34, that is, the movement of the clamping members 34 towards and away from the abutment member 32, respectively, is controlled by an actuating system (not shown in the drawings), for example a hydraulic actuating system. Preferably, the actuating system is arranged to control the transverse movement of the clamping members 34 independently of each other. In case of a hydraulic actuating system, a respective hydraulic cylinder will be associated to each clamping member 34 and the two hydraulic cylinders will preferably be controllable independently of each other.

As shown in Figure 4, the workpiece clamping unit 30 further comprises a pair of clamping hydraulic cylinders 40, namely an upper clamping hydraulic cylinder and a lower clamping hydraulic cylinder, respectively, which are arranged to clamp the profile P on vertically opposite sides thereof. Preferably, the clamping hydraulic cylinders 40 are carried by the abutment member 32.

During working, therefore, the profile P is clamped transversely between the clamping members 34 (both or only one of them) and the abutment member 32 and vertically between the clamping hydraulic cylinders 40 of the workpiece clamping unit 30.

The machine 10 further comprises a workpiece handling unit, which will be described now in detail with reference to Figures 5 to 8.

As shown in Figure 5, the workpiece handling unit comprises a pair of gripping devices, or grippers, 42, one of which is placed on the inlet side of the machine, while the other is placed on the outlet side of the machine. The gripping devices 42 are for example carried by a longitudinal beam 44 forming part of a portal-like structure 46 of the machine 10.

The gripping devices 42 are both movable in the longitudinal direction independently of each other to grasp and longitudinally move the profile P, in particular move the latter relative to the workpiece clamping unit 30 each time by one pitch so as to reach the desired position for the subsequent working operation. The longitudinal movement of each of the two gripping devices 42 along the longitudinal beam 44, and thus relative to the workpiece clamping unit 30, is controlled by a respective actuating device 48, advantageously formed by an electric motor.

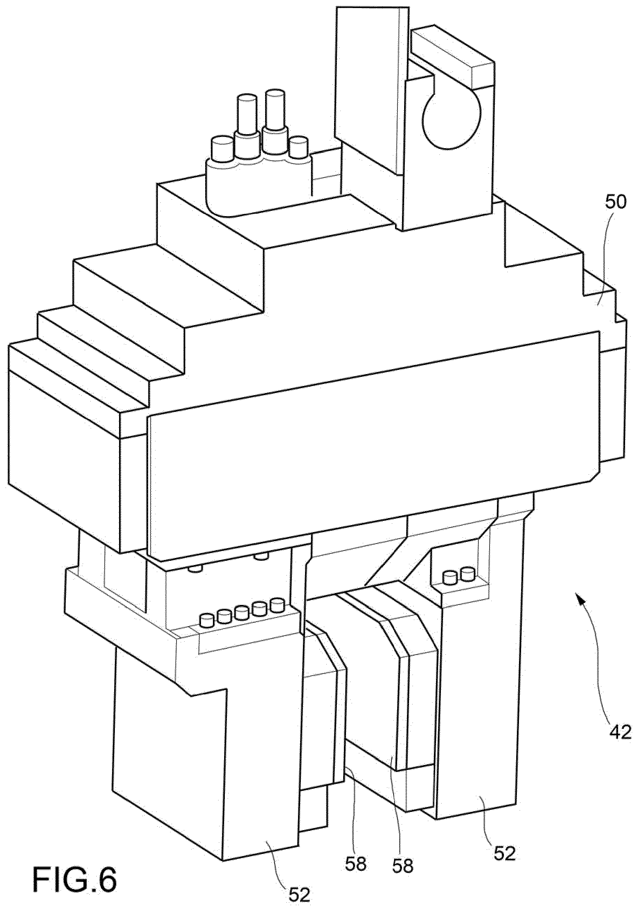

With reference also to Figure 6, each gripping device 42 comprises a support body 50 and a pair of jaws 52 carried by the support body 50. The jaws 52 are arranged facing each other and are movable relative to each other in the transverse direction, for example by means of a hydraulic actuating system (not shown in the drawings), alternately towards and away from each other, so as to grasp or release the profile P, respectively.

In order to ensure the required precision of movement, at least one of the two gripping devices 52 must be controlled so as to continuously grasp the profile P. This however involves that, due to the significant deformations of the profile P that is being worked and to the high forces that have to be applied by the workpiece clamping unit 30 to ensure clamping of the profile P during the working process, high forces are transmitted to the gripping devices 42 during working.

In order to overcome this problem, according to the invention each of the two gripping devices 42 is made as a system with controlled compliance, i.e. as a system wherein at least one degree of freedom is normally locked, so that the system normally behaves as a rigid system with respect to that degree of freedom, but once a predefined value of the applied load (force or torque, depending on whether the degree of freedom in question is a translational degree of freedom or a rotational degree of freedom, respectively) is overcome, a certain movement is allowed, whose amount depends on the ratio of the value of the applied load to said predefined value.

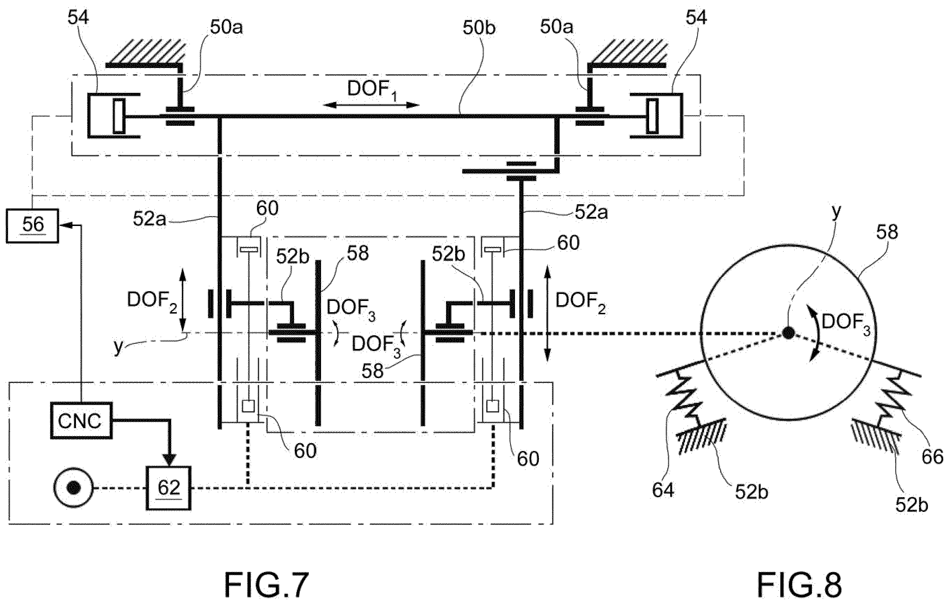

As will be explained further on, with reference in particular to Figures 7 and 8, in the proposed embodiment each gripping device 42 is made so as to have the following three degrees of freedom with controlled compliance:
- a translational degree of freedom (hereinafter referred to as first degree of freedom) in the transverse direction, namely in the direction perpendicular to the longitudinal axis of the profile P and parallel to working axis of the tools 26 of the working heads 18;
- a translational degree of freedom (hereinafter referred to as second degree of freedom) in the vertical direction, namely in the direction perpendicular both to the longitudinal axis of the profile P and to the working axis of the tools 26; and
- a rotational degree of freedom (hereinafter referred to as third degree of freedom) about a transverse axis, namely about an axis parallel to the working axis of the tools 26.

The above-defined first, second and third degrees of freedom are indicated in Figures 7 and 8 at DOF₁, DOF₂ and DOF₃, respectively.

The first degree of freedom DOF₁ is obtained by the fact that the support body 50 of each gripping device 42 is formed by two body parts 50a and 50b (schematically shown in Figure 7) which are able to translate relative to each other in the transverse direction. The body part 50a is arranged on the same side as the longitudinal beam 44 and is connected to the latter so as to translate in the longitudinal direction, as explained above. The jaws 52 are carried, on the other hand, by the body part 50b. Preferably, one of the two jaws 52 is attached to the body part 50b, while the other jaw 52 is movable relative to the body part 50b under control of the aforementioned actuating system (made for example as a hydraulic actuating system).

Between the two body parts 50a and 50b there is provided a first pneumatic control device comprising a pair of opposed pneumatic cylinders 54 supplied with the same preload pressure. Preferably, the first pneumatic control device further comprises a servo valve 56 controlled by the computer numerical control (CNC) of the machine to adjust the preload pressure of the two pneumatic cylinders 54. Alternatively, a pure manual adjustment of the preload pressure of the two pneumatic cylinders 54 may be provided for.

Insofar as the force exchanged between the two body parts 50a and 50b in the transverse direction, which force is equal to the transverse force the profile P applies to the jaws 52, is such as to generate in the pneumatic cylinders 54 (or, better, in either of the two pneumatic cylinders, depending on the direction of the force) a pressure not higher than the preload pressure set by the first servo valve 56, the body part 50b remains stationary relative to the first body part 50a. If, on the other hand, the force exchanged between the two body parts 50a and 50b in the transverse direction, and hence the force applied in the transverse direction by the profile P to the jaws 52, is such as to generate in either of the two pneumatic cylinders 54 a pressure higher than the preload pressure, then the servo valve 56 allows the discharge of a certain amount of air from said pneumatic cylinder and, thus, a certain transverse displacement of the body part 50b, along with the jaws 52, relative to the body part 50a, namely relative to the longitudinal beam 44 and the base 12. The amount and direction of the transverse movement that is thus allowed between the two body parts 50a and 50b will of course depend on the intensity and direction of the transverse reaction force applied by the profile P to the jaws 52 of the gripping device 42 which at that time is grasping the profile P.

As a result of this relative movement in the transverse direction between the two body parts 50a and 50b of the gripping device 42, a certain deformation of the profile P in the transverse direction is allowed, until the reaction force applied by the profile P to the gripping device 42 in the transverse direction decreases to such a value that the first pneumatic control device prevents relative movement of the two body parts 50a and 50b in the transverse direction.

The second degree of freedom DOF₂ is obtained in a manner similar to that of the first degree of freedom DOF₁, as explained below.

With reference still to Figure 7, each of the two jaws 52 of each gripping device 42 is formed by two jaw parts 52a and 52b which are movable relative to each other in the vertical direction. More specifically, the jaw part 52a of each jaw 52 is stationary in the vertical direction relative to the second body part 50b of the respective gripping device 42, while the other jaw part 52b is vertically movable relative to the jaw part 52a. The jaw part 52b of each jaw 52 carries a shoe 58 having a flat face 58a intended to be urged against the profile P to be grasped and handled.

A second pneumatic control device is associated to the jaws 52 of each gripping device 42 and comprises a pair of opposed pneumatic cylinders 60, which are arranged between the two jaw parts 52a and 52b of each jaw 52 and are supplied with the same preload pressure. Preferably, the second pneumatic control device further comprises a servo valve 62 (which is shared by the two pairs of pneumatic cylinders 60) controlled by the computer numerical control (CNC) of the machine to adjust the preload pressure of the pneumatic cylinders 60.

Insofar as the force exchanged between the two jaw parts 52a and 52b in the vertical direction, which is equal to the vertical force the profile P applies to the jaws 52, is such as to generate in the pneumatic cylinders 60 (or, better, in either of the two pneumatic cylinders, depending on the direction of the force) a pressure not higher than the preload pressure set by the servo valve 62, the jaw part 52b remains stationary relative to the jaw part 52a. If, on the other hand, the force exchanged between the two jaw parts 52a and 52b in the vertical direction, and hence the force applied by the profile P to the jaws 52 in the vertical direction, is such as to generate in either of the two pneumatic cylinders 62 of each jaw 52 a pressure higher than the preload pressure, then the servo valve 62 allows the discharge of a certain amount of air from said pneumatic cylinder and, thus, a certain vertical displacement of the jaw part 52b relative to the jaw part 52a, namely relative to the longitudinal beam 44 and the base 12. The amount and direction of the vertical movement between the two jaw parts 52a and 52b will of course depend on the intensity and direction of the vertical reaction force applied by the profile P to the jaws 52 of the gripping device 42 which at that time is grasping the profile P.

As a result of said relative movement in the vertical direction between the two jaw parts 52a and 52b of the jaws 52 of the gripping device 42, a certain deformation of the profile P in the vertical direction is allowed, until the reaction force applied by the profile P to the gripping device 42 in the vertical direction decreases to such a value that the second pneumatic control device prevents relative movement of the two jaw parts 52a and 52b of each jaw 52 in the vertical direction.

Finally, with reference to Figures 7 and 8, the third degree of freedom DOF₃ is obtained by virtue of the fact that the shoe 58 of each jaw 52 is rotatably mounted relative to the second jaw part 52b about an axis of rotation y oriented transversely, i.e. parallel to the working axis of the tools 26, and that between the shoe 58 and the second jaw part 52b of each jaw 52 there are interposed first elastic means 64 (formed for example by one or more elastomeric springs) arranged to apply an elastic reaction torque between the shoe 58 and the second jaw part 52b in a given direction and second elastic means 66 (also formed for example by one or more elastomeric springs) arranged to apply an elastic reaction torque between the shoe 58 and the second jaw part 52b in the opposite direction with respect to the first elastic means 64. The first and second elastic means 64 and 66 have the same preload and the same stiffness.

Insofar as the torque applied by the profile P about the axis y onto the shoes 58 of the jaws 52 of the gripping device 42 which is grasping the profile is not higher than the preload of the first and second elastic means 64 and 66, each shoe 58 does not rotate relative to the jaw part 52b of the respective jaw 52. If, on the other hand, the torque applied by the profile P is higher than the preload of the first and second elastic means 64 and 66, then these elastic means start to deform, thereby allowing a certain angular displacement of each shoe 58 relative to the jaw part 52b. The amount and direction of the rotation between the shoe 58 and the jaw part 52b of each jaw 52 about the axis of rotation y will of course depend on the intensity and direction of the torque applied by the profile P to the shoes 58.

As a result of this rotational movement of the shoes 58 relative to the jaw parts 52b about the axis of rotation y, a certain deformation of the profile P in the vertical plane is allowed, until the torque applied by the profile P to the gripping device 42 decreases to a value lower than the preload of the first and second elastic means 64 and 66.

As already mentioned, each of the gripping devices 42 of the machine 10 will preferably have all the three degrees of freedom DOF₁, DOF₂ and DOF₃ with controlled compliance described above. Such a condition is not, however, essential, as it suffices that each of the gripping devices 42 has at least one of said degrees of freedom with controlled compliance, preferably at least the first degree of freedom DOF₁.

As will be clear from the above description, by virtue of the gripping devices being made as systems having at least one degree of freedom with controlled compliance, a certain deformation of the profile that is being worked is allowed, which makes it possible to limit the reaction forces or torques applied by the profile to the gripping device which at that time is grasping the profile.

Machines according to the invention may vary from the above illustrative embodiment within the scope of the invention as defined in the accompanying claims.

## Claims

1. Machine (10) for the working of prismatic profiles (P), the machine being arranged to carry out in sequence working operations such as boring, tapping, drilling, flaring, spot-facing or rolling operations, with a constant or variable spacing, along at least one longitudinal generating line of the profile (P), and comprising:
a stationary base (12);
two or more working heads (18) for carrying out on the profile (P) the aforesaid working operations along a horizontal working axis extending perpendicular to a longitudinal axis of the profile (P);
a workpiece clamping unit (30) for clamping the profile (P) while the working heads (18) are carrying out working operations on said profile (P); and
a workpiece handling unit comprising two or more gripping devices (42) which are movable in a controlled manner in the direction of the longitudinal axis of the profile (P) to position the profile (P) longitudinally in a given position relative to the clamping unit (30), each gripping device (42) comprising a support body (50) and a pair of jaws (52) which are movable transversely towards or away from each other to grasp or release the profile (P), respectively;
**characterized in that** each gripping device (42) is configured so as to have at least one degree of freedom (DOF₁, DOF₂, DOF₃) with controlled compliance.

2. Machine according to claim 1, wherein the working heads (18) are movable in a controlled manner with at least two degrees of freedom in a vertical plane perpendicular to the longitudinal axis of the profile (P).

3. Machine according to claim 1 or claim 2, wherein said at least one degree of freedom (DOF₁, DOF₂, DOF₃) with controlled compliance includes a translational degree of freedom (DOF₁) along a direction perpendicular to the longitudinal axis of the profile (P), that is, along a horizontal direction parallel to the working axis of the working heads (18).

4. Machine according to claim 3, wherein the support body (50) of each gripping device (42) includes a first body part (50a) and a second body part (50b) which are movable relative to each other along said horizontal direction, and wherein each gripping device (42) further comprises a first control device (54, 56) for controlling movement of said first and second body parts (50a, 50b) relative to each other along said horizontal direction depending on the force applied by the profile (P) to the gripping device (42) along said horizontal direction, whereby translation of said first and second body parts (50a, 50b) relative to each other along said horizontal direction is allowed only in case of force values higher than a first predetermined force value.

5. Machine according to claim 4, wherein said first control device (54, 56) comprises a pair of first opposed pneumatic cylinders (54), which are interposed between said first and second body parts (50a, 50b) and are supplied with a same first preload pressure.

6. Machine according to claim 5, wherein said first control device (54, 56) further comprises first valve means (56) for adjusting said first preload pressure.

7. Machine according to any one of the preceding claims, wherein said at least one degree of freedom (DOF₁, DOF₂, DOF₃) with controlled compliance includes a translational degree of freedom (DOF₂) along a vertical direction, that is, along a direction perpendicular to the longitudinal axis of the profile (P) and perpendicular to the working axis of the working heads (18).

8. Machine according to claim 7, wherein the jaws (52) of each gripping device (42) are each arranged to translate along said vertical direction relative to the support body (50) of said gripping device (42), and wherein each gripping device (42) further comprises a second control device (60, 62) for controlling the translational movement of each of the jaws (52) relative to the support body (50) along said vertical direction depending on the force applied by the profile (P) to the gripping device (42) along said vertical direction, whereby translation of each of the jaws (52) relative to the support body (50) along said vertical direction is allowed only in case of force values higher than a second predetermined force value.

9. Machine according to claim 8, wherein said second control device (60, 62) comprises, for each jaw (52), a pair of second opposed pneumatic cylinders (60), which are interposed between the jaw (52) and the support body (50) and are supplied with a same second preload pressure.

10. Machine according to claim 9, wherein said second control device (60, 62) further comprises second valve means (62) for adjusting said second preload pressure.

11. Machine according to any one of the preceding claims, wherein said at least one degree of freedom (DOF₁, DOF₂, DOF₃) with controlled compliance includes a rotational degree of freedom (DOF₃) about an axis of rotation (y) parallel to the working axis of the working heads (18).

12. Machine according to claim 11, wherein each gripping device (42) further comprises a pair of shoes (58), each carried by a respective jaw (52) to be urged each against a respective side of the profile (P), wherein each shoe (58) is rotatable relative to the respective jaw (52) about said axis of rotation (y), and wherein each gripping device (42) further comprises, for each jaw (52), a third control device (64, 66) for controlling the rotation of the shoe (58) relative to the jaw (52) about said axis of rotation (y) depending on the torque applied by the profile (P) to the shoe (58), whereby rotation of each shoe (58) relative to the respective jaw (52) about said axis of rotation (y) is allowed only in case of torque values higher than a predetermined torque value.

13. Machine according to claim 12, wherein said third control device (64, 66) comprises first elastic means (64) for applying an elastic reaction torque between the respective shoe (58) and the respective jaw (52) in a given direction and second elastic means (66) for applying an elastic reaction torque between the respective shoe (58) and the respective jaw (52b) in a direction opposite to that of said first elastic means (64), said first and second elastic means (64, 66) having the same preload and the same stiffness.

## Patentansprüche

1. Maschine (10) für das Bearbeiten von prismatischen Profilen (P), wobei die Maschine dazu eingerichtet ist, in Reihenfolge Bearbeitungsoperationen auszuführen, wie beispielsweise Operationen eines Lochens, eines Gewindeschneidens, eines Bohrens, eines Sickens, eines Plan-Schleifens oder eines Plansenkens, mit einem konstanten oder variablen Abstand entlang wenigstens einer longitudinalen Erzeugungslinie des Profils (P), und umfassend:
eine stationäre Basis (12);
zwei oder mehr Bearbeitung-Köpfe (18) zum Ausführen der voranstehend erwähnten Bearbeitungsoperationen an dem Profil (P) entlang einer horizontalen Bearbeitungsachse, welche sich zu einer longitudinalen Achse des Profils (P) rechtwinklig erstreckt;
eine Werkstück-Klemmeinheit (30) zum Klemmen des Profils (P), während die Bearbeitung-Köpfe (18) Bearbeitungsoperationen an dem Profil (P) ausführen; und
eine Werkstück-Behandlungseinheit, welche zwei oder mehr Greifvorrichtungen (42) umfasst, welche in einer gesteuerten Weise in der Richtung der longitudinalen Achse des Profils (P) zu einer Position des Profils (P) longitudinal in einer gegebenen Position relativ zu der Klemmeinheit (30) beweglich sind, wobei jede Greifvorrichtung (42) einen Halterung-Körper (50) und ein Paar von Klauen (52) umfasst, welche transversal in Richtung aufeinander zu oder voneinander weg beweglich sind, um das Profil (P) zu greifen bzw. freizugeben;
**dadurch gekennzeichnet, dass** jede Greifvorrichtung (42) dazu eingerichtet ist, wenigstens einen Freiheitsgrad (DOF₁, DOF₂, DOF₃) mit einer gesteuerten Konformität aufzuweisen.

2. Maschine nach Anspruch 1, wobei die Bearbeitung-Köpfe (18) in einer gesteuerten Weise mit wenigstens zwei Freiheitsgraden in einer vertikalen Ebene rechtwinklig zu der longitudinalen Achse des Profils (P) beweglich sind.

3. Maschine nach Anspruch 1 oder Anspruch 2, wobei der wenigstens eine Freiheitsgrad (DOF₁, DOF₂, DOF₃) mit einer gesteuerten Konformität einen translatorischen Freiheitsgrad (DOF₁) entlang einer Richtung rechtwinklig zu der longitudinalen Achse des Profils (P) umfasst, das heißt entlang einer horizontalen Richtung parallel zu der Bearbeitungsachse der Bearbeitung-Köpfe (18).

4. Maschine nach Anspruch 3, wobei der Halterung-Körper (50) jeder Greifvorrichtung (42) einen ersten Körperteil (50a) und einen zweiten Körperteil (50b) umfasst, welche relativ zueinander entlang der horizontalen Richtung beweglich sind, und wobei jede Greifvorrichtung (42) ferner eine erste Steuervorrichtung (54, 56) zum Steuern einer Bewegung der ersten und zweiten Körperteile (50a, 50b) relativ zueinander entlang der horizontalen Richtung abhängig von der Kraft umfasst, welche durch das Profil (P) auf die Greifvorrichtung (42) entlang der horizontalen Richtung ausgeübt wird, wodurch eine Translation der ersten und zweiten Körperteile (50a, 50b) relativ zueinander entlang der horizontalen Richtung nur in einem Fall von Kraftwerten erlaubt wird, welche höher sind als ein erster vorbestimmter Kraftwert.

5. Maschine nach Anspruch 4, wobei die erste Steuervorrichtung (54, 56) ein Paar von ersten entgegengesetzten pneumatischen Zylindern (54) umfasst, welche zwischen den ersten und zweiten Körperteilen (50a, 50b) eingefügt sind und mit einem gleichen ersten vorgeladenen Druck beliefert sind.

6. Maschine nach Anspruch 5, wobei die erste Steuervorrichtung (54, 56) ferner erste Ventilmittel (56) zum Einstellen des ersten vorgeladenen Drucks umfasst.

7. Maschine nach einem der vorhergehenden Ansprüche, wobei der wenigstens eine Freiheitsgrad (DOF₁, DOF₂, DOF₃) mit einer kontrollierten Konformität einen translatorischen Freiheitsgrad (DOF₂) entlang einer vertikalen Richtung umfasst, das heißt entlang einer Richtung rechtwinklig zu der longitudinalen Achse des Profils (P) und rechtwinklig zu der Bearbeitung-Achse der Bearbeitung-Köpfe (18).

8. Maschine nach Anspruch 7, wobei die Klauen (52) jeder Greifvorrichtung (42) dazu eingerichtet sind, sich entlang der vertikalen Richtung relativ zu dem Halterung-Körper (50) der Greifvorrichtung (42) zu verlagern, und wobei jede Greifvorrichtung (42) ferner eine zweite Steuervorrichtung (60, 62) zum Steuern der translatorischen Bewegung von jeder der Klauen (52) relativ zu dem Halterung-Körper (50) entlang der vertikalen Richtung abhängig von der Kraft umfasst, welche durch das Profil (P) auf die Greifvorrichtung (42) entlang der vertikalen Richtung ausgeübt wird, wodurch eine Translation von jeder der Klauen (52) relativ zu dem Halterung-Körper (50) entlang der vertikalen Richtung nur in einem Fall von Kraftwerten erlaubt wird, welche höher sind als ein zweiter vorbestimmter Kraftwert.

9. Maschine nach Anspruch 8, wobei die zweite Steuervorrichtung (60, 62) für jede Klaue (52) ein Paar von zweiten entgegengesetzten pneumatischen Zylindern (60) umfasst, welche zwischen der Klaue (52) und dem Halterung-Körper (50) eingefügt sind und mit einem gleichen zweiten vorgeladenen Druck beliefert sind.

10. Maschine nach Anspruch 9, wobei die zweite Steuervorrichtung (60, 62) ferner zweite Ventilmittel (62) zum Einstellen des zweiten vorgeladenen Drucks umfasst.

11. Maschine nach einem der vorhergehenden Ansprüche, wobei der wenigstens eine Freiheitsgrad (DOF₁, DOF₂, DOF₃) mit einer gesteuerten Konformität einen rotatorischen Freiheitsgrad (DOF₃) um eine Rotationsachse (y) parallel zu der Bearbeitung-Achse der Bearbeitung-Köpfe (18) umfasst.

12. Maschine nach Anspruch 11, wobei jede Greifvorrichtung (42) ferner ein Paar von Schulen (58) umfasst, welche durch eine entsprechende Klaue (52) getragen werden, um jeweils gegen eine entsprechende Seite des Profils (P) gedrängt zu werden, wobei jeder Schuh (58) relativ zu der jeweiligen Klaue (52) um die Rotationsachse (y) rotierbar ist, und wobei jede Greifvorrichtung (42) ferner für jede Klaue (52) eine dritte Steuervorrichtung (64, 66) zum Steuern der Rotation des Schuhs (58) relativ zu der Klaue (52) um die Rotationsachse (y) abhängig von dem Moment umfasst, welches durch das Profil (P) auf den Schuh (58) ausgeübt wird, wodurch eine Rotation von jedem Schuh (58) relativ zu der jeweiligen Klaue (52) um die Rotationsachse (y) nur in einem Fall von Momenten-Werten erlaubt wird, welche höher sind als ein vorbestimmter Momenten-Wert.

13. Maschine nach Anspruch 12, wobei die dritte Steuervorrichtung (64, 66) erste elastische Mittel (64) zum Ausüben eines elastischen Rückzug-Moments zwischen dem jeweiligen Schuh (58) und der jeweiligen Klaue (52) in einer gegebenen Richtung und zweite elastische Mittel (66) zum Ausüben eines elastischen Rückzug-Moments zwischen dem jeweiligen Schuh (58) und der jeweiligen Klaue (52b) in einer Richtung umfasst, welche zu derjenigen der ersten elastischen Mittel (64) entgegengesetzt ist, wobei die ersten und zweiten elastischen Mittel (64, 66) die gleiche Vorlast und die gleiche Steifigkeit aufweisen.

## Revendications

1. Machine (10) pour l'usinage de profilés prismatiques (P), la machine étant agencée pour réaliser de manière séquentielle des opérations d'usinage telles que des opérations d'alésage, de coulée, de perçage, d'évasement, de lamage et de laminage, avec un espacement constant ou variable, le long d'au moins une ligne de génération longitudinale du profilé (P), et comprenant :
une base fixe (12) ;
deux ou plus têtes d'usinage (18) pour réaliser sur le profilé (P) les opérations d'usinage précitées le long d'un axe d'usinage horizontal s'étendant perpendiculairement à un axe longitudinal du profilé (P) ;
une unité de serrage (30) de pièce pour serrer le profilé (P) alors que les têtes d'usinage (18) réalisent des opérations d'usinage sur ledit profilé (P) ; et
une unité de manipulation de pièce comprenant deux ou plus dispositifs de préhension (42) qui sont mobiles d'une manière commandée dans la direction de l'axe longitudinal du profilé (P) pour positionner le profilé (P) longitudinalement dans une position donnée par rapport à l'unité de serrage (30), chaque dispositif de préhension (42) comprenant un corps de support (50) et une paire de mâchoires (52) qui sont mobiles transversalement l'une vers l'autre ou loin l'une de l'autre pour saisir ou relâcher le profilé (P), respectivement ;
**caractérisée en ce que** chaque dispositif de préhension (42) est configuré de manière à avoir au moins un degré de liberté (DOF₁, DOF₂, DOF₃) avec une conformité commandée.

2. Machine selon la revendication 1, dans laquelle les têtes d'usinage (18) sont mobiles d'une manière commandée avec au moins deux degrés de liberté dans un plan vertical perpendiculaire à l'axe longitudinal du profilé (P).

3. Machine selon la revendication 1 ou la revendication 2, dans laquelle ledit au moins un degré de liberté (DOF₁, DOF₂, DOF₃) avec une conformité commandée inclut un degré de liberté de translation (DOF₁) le long d'une direction perpendiculaire à l'axe longitudinal du profilé (P), c'est-à-dire, le long d'une direction horizontale parallèle à l'axe d'usinage des têtes d'usinage (18).

4. Machine selon la revendication 3, dans laquelle le corps de support (50) de chaque dispositif de préhension (42) inclut une première partie de corps (50a) et une seconde partie de corps (50b) qui sont mobiles l'une par rapport à l'autre le long de ladite direction horizontale, et dans laquelle chaque dispositif de préhension (42) comprend en outre un premier dispositif de commande (54, 56) pour commander le déplacement desdites première et seconde parties de corps (50a, 50b) l'une par rapport à l'autre le long de ladite direction horizontale en fonction de la force appliquée par le profilé (P) au dispositif de préhension (42) le long de ladite direction horizontale, moyennant quoi la translation desdites première et seconde parties de corps (50a, 50b) l'une par rapport à l'autre le long de ladite direction horizontale est autorisée seulement dans un cas de valeurs de force supérieures à une première valeur de force prédéterminée.

5. Machine selon la revendication 4, dans laquelle ledit premier dispositif de commande (54, 56) comprend une paire de premiers vérins pneumatiques (54) opposés, qui sont interposés entre lesdites première et seconde parties de corps (50a, 50b) et sont alimentés d'une même première pression de précharge.

6. Machine selon la revendication 5, dans laquelle ledit premier dispositif de commande (54, 56) comprend en outre un premier moyen de soupape (56) pour ajuster ladite première pression de précharge.

7. Machine selon l'une quelconque des revendications précédentes, dans laquelle ledit au moins un degré de liberté (DOF₁, DOF₂, DOF₃) avec une conformité commandée inclut un degré de liberté de translation (DOF₂) le long d'une direction verticale, c'est-à-dire, le long d'une direction perpendiculaire à l'axe longitudinal du profilé (P) et perpendiculaire à l'axe d'usinage des têtes d'usinage (18).

8. Machine selon la revendication 7, dans laquelle les mâchoires (52) de chaque dispositif de préhension (42) sont chacune agencées pour se déplacer le long de ladite direction verticale par rapport au corps de support (50) dudit dispositif de préhension (42), et dans laquelle chaque dispositif de préhension (42) comprend en outre un deuxième dispositif de commande (60, 62) pour commander le déplacement de translation de chacune des mâchoires (52) par rapport au corps de support (50) le long de ladite direction verticale en fonction de la force appliquée par le profilé (P) au dispositif de préhension (42) le long de ladite direction verticale, moyennant quoi la translation de chacune des mâchoires (52) par rapport au corps de support (50) le long de ladite direction verticale est autorisée seulement dans le cas de valeurs de force supérieures à une seconde valeur de force prédéterminée.

9. Machine selon la revendication 8, dans laquelle ledit deuxième dispositif de commande (60, 62) comprend, pour chaque mâchoire (52), une paire de seconds vérins pneumatiques (60) opposés, qui sont interposés entre la mâchoire (52) et le corps de support (50) et sont alimentés en une même seconde pression de précharge.

10. Machine selon la revendication 9, dans laquelle ledit deuxième dispositif de commande (60, 62) comprend en outre un second moyen de soupape (62) pour ajuster ladite seconde pression de précharge.

11. Machine selon l'une quelconque des revendications précédentes, dans laquelle ledit au moins un degré de liberté (DOF₁, DOF₂, DOF₃) avec une conformité commandée inclut un degré de liberté de rotation (DOF₃) autour d'un axe de rotation (y) parallèle à l'axe d'usinage des têtes d'usinage (18).

12. Machine selon la revendication 11, dans laquelle chaque dispositif de préhension (42) comprend en outre une paire de patins (58), chacun porté par une mâchoire (52) respective pour être poussé chacun contre un côté respectif du profilé (P), dans laquelle chaque patin (58) peut tourner par rapport à la mâchoire (52) respective autour dudit axe de rotation (y), et dans laquelle chaque dispositif de préhension (42) comprend en outre, pour chaque mâchoire (52), un troisième dispositif de commande (64, 66) pour commander la rotation du patin (58) par rapport à la mâchoire (52) autour dudit axe de rotation (y) en fonction du couple appliqué par le profilé (P) au patin (58), moyennant quoi la rotation de chaque patin (58) par rapport à la mâchoire (52) respective autour dudit axe de rotation (y) est autorisée seulement dans le cas de valeurs de couple supérieures à une valeur de couple prédéterminée.

13. Machine selon la revendication 12, dans laquelle ledit troisième dispositif de commande (64, 66) comprend un premier moyen élastique (64) pour appliquer un couple de réaction élastique entre le patin (58) respectif et la mâchoire (52) respective dans une direction donnée et un second moyen élastique (66) pour appliquer un couple de réaction élastique entre le patin (58) respectif et la mâchoire (52b) respective dans une direction opposée à celle dudit premier moyen élastique (64), lesdits premier et second moyens élastiques (64, 66) ayant la même précharge et la même rigidité.
